Europäisches Patentamt

European Patent Office

Office européen des brevets

(11) Veröffentlichungsnummer: **0 376 020**
**A2**

## (12) EUROPÄISCHE PATENTANMELDUNG

(21) Anmeldenummer: 89122643.3

(22) Anmeldetag: 08.12.89

(51) Int. Cl.5: **C08J 11/06, C08J 3/12,**
**C09D 201/00, C08L 27/06**

(30) Priorität: 22.12.88 CH 4764/88
17.10.89 CH 3789/89

(43) Veröffentlichungstag der Anmeldung:
04.07.90 Patentblatt 90/27

(84) Benannte Vertragsstaaten:
AT BE CH DE ES FR GB GR IT LI LU NL SE

(71) Anmelder: IFASA HOLDING AG
Baslerstrasse 37
CH-4601 Olten(CH)

(72) Erfinder: Mendler, Alain
Rue du Cimetière Lawalck
F-67350 Pfaffenhoffen(FR)

(54) Verfahren zur Herstellung eines Pulvers aus Lackreststoffen.

(57) Ein Pulver aus Lackreststoffen wird erhalten, indem man dem Lackreststoff das Wasser und die organischen Lösungsmittel entzieht und den so erhaltenen Filterkuchen pulverisiert.

Es wird auch ein Verfahren zur Herstellung einer gefüllten, wässrigen, spritzbaren Dispersion unter Verwendung dieses Pulvers beschrieben.

Diese Dispersion kann zur Beschichtung von Metalloberflächen oder von Oberflächen von Legierungen verwendet werden.

EP 0 376 020 A2

# Verfahren zur Herstellung eines Pulvers aus Lackreststoffen

Die vorliegende Erfindung betrifft ein Verfahren zur Herstellung eines Pulvers aus Lackreststoffen, ein Verfahren zur Herstellung einer gefüllten, wässrigen, spritzbaren Dispersion sowie die Verwendung dieser Dispersion zur Beschichtung von Oberflächen von Metallen oder Legierungen.

Gegenstände aus Metallen oder Legierungen, z.B. Fahrzeugteile, insbesondere in der Automobilherstellung, werden üblicherweise am Fliessband in einer Spritzkammer mit einem Lack versehen. In einer solchen Spritzkammer entsteht ein Farbnebel. Dieser Farbnebel wird durch einen Wasservorhang an den Wänden der Spritzkammer aufgenommen. Das Wasser enthält ein Koagulierungsmittel, damit der Farbnebel koaguliert; d.h. es entsteht eine Klumpenbildung. Am Boden der Spritzkammer werden die Koagulate gesammelt und weggeführt. Dieses Abfallprodukt wurde früher als Lackschlamm bezeichnet; die neuere Bezeichnung lautet Lackreststoff. Ein solcher Lackreststoff enthält im allgemeinen organische Lösungsmittel, wie etwa Ethylacetat und Xylol, und Wasser sowie Feststoffe. Die Feststoffe bestehen aus zirka 30 Gew.-% organischem Anteil, insbesondere Bindemittell z.B. Polyester-und/oder Polyurethan-Polymere, und zirka 70 Gew.-% anorganischem Anteil, insbesondere Farbstoffe und Füllstoffe, wie etwa Titanoxid, Bariumsulfat, Kreide, Silicium.

Bei der Herstellung eines Autos fallen 3 bis 4 kg Lackreststoff vom oben beschriebenen Typ an. Das heisst, dass bei einem heutigen Automobilhersteller täglich grosse Tonnagen an Lackreststoff anfallen.

Die Lackreststoffe wurden üblicherweise in einer Deponie eingelagert, wodurch das Entsorgungsproblem natürlich nicht gelöst ist.

Es wurde vorgeschlagen, Lackreststoffe in einer Dicke von ca. 0,5 bis 1 cm auf eine Kunststoff-Folie, z.B. eine Polyethylenfolie oder eine Polyvinylchloridfolie, aufzutragen. Nach zusätzlicher Beimischung von Bindemitteln wird dieser Verbund als Dämmstoff im Innern der Karrosserie eines Autos verwendet.

Eine weitere Verwendungsmöglichkeit dieser Lackreststoffe besteht darin, dass man dem Lackreststoff mittels Extraktion mit organischen Lösungsmitteln die Bindemittel entzieht und letztere einer neuen Charge Lack zumischt. Der Rest muss dann allerdings einer Deponie zugeführt werden.

Das Ziel der vorliegenden Erfindung besteht darin, die anfallenden Lackreststoffe einem nahezu quantitativen Recyclingverfahren zuzuführen und demnach diese Lackreststoffe nahezu quantitativ in einer anderen Form wieder zu verwenden. Das anfallende Wasser und die organischen Lösungsmittel werden dabei gesondert verwertet.

Demzufolge betrifft die vorliegende Erfindung ein Verfahren zur Herstellung eines Pulvers aus Lackreststoffen, welches dadurch gekennzeichnet ist, dass man dem Lackreststoff das Wasser und die organischen Lösungsmittel entzieht und den so erhaltenen Filterkuchen pulverisiert.

Bevorzugte Ausführungsformen dieses Verfahrens sind in den abhängigen Ansprüchen definiert.

Im folgenden wird eine Variante dieses Verfahrens näher erläutert:

Den anfallenden Lackreststoffen werden in einer ersten Stufe das Wasser und die organischen Lösungsmittel weitgehendst entzogen, z.B. mittels Filterpresse, Zentrifugieren, Abnutschen. Der so ausgepresste Filterkuchen wird dann in möglichst kleine Agglomerate gebracht. Die Teilchengrösse sollte kleiner sein als 20cm$^3$, aber sie sollte grösser als 1 cm$^3$ sein. Um Reste an Wasser und organischem Lösungsmittel aus diesen Agglomeraten zu entfernen werden diese erwärmt, z.B. in einem über 100°C warmen Ofen mit oder ohne Vakuum, Hochfrequenz, Mikrowellen.

Die so getrockneten Agglomerate müssen derart beschaffen sein, dass sie anschliessend pulverisiert werden können. Gegebenenfalls werden zusammenballende Agglomerate einem Brechvorgang, z.B. in einem Zerbrecher, Schredder, unterworfen.

Die Pulverisierung kann in einer Kugelmühle erfolgen. Das Pulver soll Teilchengrössen von 20 bis 80 Mikrometer, insbesondere 30 bis 50 Mikrometer, aufweisen.

Dem so hergestellten Pulver kommt nun völlig überraschend die Funktion eines Füllstoffes zu, der somit nun auch wässrigen Dispersionen und/oder Heissschmelzmassen zugesetzt werden kann. Im Prinzip kann dieses Pulver irgendwelchen Produkten zugefügt werden, welche keine organische Lösungsmittel enthalten, die die Bindemittel anlösen.

Die vorliegende Erfindung betrifft demzufolge auch ein Verfahren zur Herstellung einer gefüllten, wässrigen, spritzbaren Dispersion, welches dadurch gekennzeichnet ist, dass man wenigstens eine im Handel erhältliche wässrige Dispersion, welche keine organischen Lösungsmittel enthält, vorlegt, dann wenigstens einen Hilfsstoff, ausgewählt aus der Gruppe, bestehend aus Haftvermittlern, Tensiden, Vernetzungsmitteln, Konservierungsmitteln, Anti-skin-Mitteln, Weichmachern, vorzugsweise Bitumen, Thixotropiermitteln und Entschäumern, hinzugibt und danach ein Pulver, hergestellt gemäss dem oben erwähnten ersten erfindungsgemässen Verfahren, zufügt und dispergiert.

Produkten, die als Unterbodenschutz, sowie Antidröhn verwendet werden, werden aus wirtschaftlichen Ueberlegungen Füllstoffe zugesetzt. Füllstoffe gemäss dem Stand der Technik sind z.B. Bariumsulfat, Kreide, Silicium, Kaolin, Schwerspat, etc. Bislang wurde ein Unterbodenschutz, Korrosionsschutz oder Antidröhn nicht auf Basis einer wässrigen Dispersion hergestellt.

Wässrige Dispersionen, die keine organischen Lösungsmittel enthalten, sind umweltfreundlich.

Zu einer oder mehreren im Handel erhältlichen wässrigen Dispersionen, welche keine organischen Lösungsmittel enthalten, werden übliche Hilfsstoffe, wie Haftvermittler, Tenside, Vernetzungsmittel, Konservierungsmittel, Anti-skin-Mittel, Weichmacher, z.B. Bitumen, Thixotropiermittel sowie Entschäumer und das erfindungsgemäss hergestellte Pulver aus Lackreststoff zugesetzt und eindispergiert. Es resultiert eine Dispersion, welche im vorliegenden Fall 60 Gew.-% Feststoffgehalt aufweisen kann. Davon können 15 Gew.-% auf das erfindungsgemäss hergestellte Pulver entfallen.

Schlussendlich betrifft die vorliegende Erfindung auch noch die Verwendung der gemäss dem erfindungsgemässen Verfahren hergestellten Dispersion zur Beschichtung von Metalloberflächen oder von Oberflächen von Legierungen. Die genannten Oberflächen können katophoresiert sein.

So beschichtete Oberflächen findet man beispielsweise auf der Unterseite von Fahrzeugen, im Innern von Fahrzeugen, insbesondere im Automobilbau. Die Beschichtung kann als Unterbodenschutz und/oder Antidröhn und/oder Korrosionsschutz dienen.

Die ausgetrocknete Beschichtung, die vorzugsweise nicht dicker als 1 mm sein soll, ist kältebeständig bis -40°C, wasserbeständig und wärmebeständig bis + 160°C.

Die nachfolgenden Beispiele illustrieren die vorliegenden Erfindungen.

Beispiel 1 (Herstellung des Pulvers aus Lackreststoff)

2 kg nasser Lackreststoff werden in eine Pressfilteranlage eingeführt. Es wird ein Druck von 2 kg/cm² aufgebaut und während 15 Minuten gehalten. Es bleiben 1,60 kg eines nahezu trockenen Lackreststoffes in Form eines Kuchens zurück. Dieser Filterkuchen wird in Teilchen von 20 bis 1 cm³ zerkleinert und dann 90 Minuten bei einer Temperatur von 130°C in einem Umluftofen getrocknet. Die so getrockneten Teilchen (Gesamtgewicht 1,5 kg) werden dann in einen Zerbrecher eingeführt und 30 Minuten bearbeitet; die Teilchen haben dann eine durchschnittliche Grösse von 0,1 bis 1,5 cm. Die Teilchen werden dann in eine Kugelmühle aus Keramik eingeführt (Durchmesser der Mühle:

30 cm; Durchmesser der Kugeln: 3 cm) und 8 bis 12 Stunden bearbeitet. Das so entstandene Pulver wird dann durch ein Stahlgewebe (Maschengrösse 40 Mikrometer) sortiert. Die Teilchen, die grösser als 40 Mikrometer sind, werden wieder in die Kugelmühle zu-geführt und in einem neuen Arbeitszyklus weiter zerkleinert.

Beispiel 2 (Herstellung der Dispersion)

Es werden 1 kg Acronal 80 D (BASF) und 1 kg Mowilith DHW (Hoechst) in einem 7 Liter fassenden doppelwandigen Stahlreaktor, ausgerüstet mit Rührwerk, Thermometer und Vakuumansatz, eingeführt und unter Rühren auf 80°C gebracht. Dann werden zu dieser wässrigen Dispersion 56 g 50 Gew.-%ige, wässrige NaOH-Lösung (Vernetzer) zugefügt und 90 Minuten bei 80°C reagieren gelassen. Danach werden 60 g Harnstoff (Antiskin-Mittel), 60 g Butylglycol (Frostschutz) und 64 g Hydrochinon (Haftmittel) unter Rühren eingeführt. Die ganze Mischung wird dann auf + 40°C abgekühlt. Wenn die Mischung die + 40°C erreicht hat, werden 40g Acticide BG (Bourrigeaud) (Konservierungsmittel) zugeführt. Nach 5 Minuten Mischungszeit werden 560 g Eubit 45 (V.A.T.) (Weichmacher) sowie 40 g Calgon S (Henkel) (Entschäumer) beigegeben. 1 kg Lackreststoffpulver, welches als Füllstoff dient, wird gleichmässig während 10 Minuten unter Rühren eingeführt. Abschliessend werden 80 g Aerosil 380 (Degussa) (Thixotropiermittel) zugeführt und unter heftigem Rühren und unter Vakuum (18 mm Hg) während 15 Minuten dispergiert. Das Produkt wird dann auf Raumtemperatur gekühlt und abgefüllt.

Beispiel 3 (Beschichtung)

Die gemäss Beispiel 2 hergestellte Dispersion wird mittels einer Spritzanlage auf Metalloberflächen aufgetragen. Die Spritzanlage besteht aus einer Becherpistole und ist mit einer 27-er Düse ausgestattet. Der Druck betrug 2,5 Bar. Die ausgetrocknete Beschichtung war nicht dicker als 1 Millimeter.

Beispiel 4 (Herstellung des Plastisols)

Es werden 328 g Solvio 372 HA (Solvay) und 360 g Jayflex DOP (Exxon) in einem 2 Liter fassenden doppelwandigen Z-Knetter, ausgerüstet mit Thermometer, Vakuumsatz und Barometer, eingeführt und zusammengemischt. Dann werden zu dieser Paste 32 g Exxsol D 80/100 (Esso Chemie) (Lösungsmittel) zugefügt. Danach werden 20 g Calowol W5G (Sturge) (Dehydriermittel), 10 g Epilink DP 260 (AKZO Chemie) (Haftvermittler) unter Rühren eingeführt und 5 Minuten verknettet. Zu der ganzen Mischung wird dann 4 g Zinkoxid (Stabilisator) 8 g Russpaste, 20 g Sachtolith L (Sachtleben) (Pigmente) zugegeben und während 5 Minuten zusammengeführt. 150 g Lackreststoffpulver, welches als Füllstoff dient, wird gleichmässig während 10 Minuten unter Rühren eingeführt. Abschliessend werden 50 g Socal 2 G 312 UFE (Solvay) und HDK T 40 (Degussa) (Thixotropiermittel) zugeführt und unter Vakuum (18 mm Hg) und heftigem Kneten während 15 Minuten dispergiert. Das Produkt wird dann abgefüllt.

Beispiel 5 (Beschichtung)

Das gemäss Beispiel 4 hergestellte Plastisol wird mittels einer Spritzanlage auf Metalloberflächen aufgetragen. Die Spritzanlage besteht aus einer Airless-Pumpe, Verdichtung 1/63, und einer Pistole, die mit einer 27-er Düse ausgestattet ist. Die während 20 Minuten bei 160°C getrocknete Beschichtung war nicht dicker als 2 Centimeter.

**Ansprüche**

1. Verfahren zur Herstellung eines Pulvers aus Lackreststoffen, dadurch gekennzeichnet, dass man dem Lackreststoff das Wasser und die organischen Lösungsmittel entzieht und den so erhaltenen Filterkuchen pulverisiert.

2. Verfahren nach Anspruch 1, dadurch gekennzeichnet, dass die Entfernung des Wassers und der organischen Lösungsmittel mittels Filterpresse, Zentrifugation, Kalander, Vakuum oder Abnutschen erfolgt.

3. Verfahren nach einem der Ansprüche 1 bis 2, dadurch gekennzeichnet, dass die Entfernung des Wassers und der organischen Lösungsmittel mittels Erwärmen, insbesondere mit Temperaturen über 100°C, erfolgt.

4. Verfahren nach einem der Ansprüche 1 bis 3, dadurch gekennzeichnet, dass die Pulverisierung in einer Kugelmühle erfolgt.

5. Verfahren nach einem der Ansprüche 1 bis 4, dadurch gekennzeichnet, dass das Pulver eine Korngrösse von etwa 30 bis etwa 50 Mikrometer aufweist.

6. Verfahren zur Herstellung einer gefüllten, wässrigen, spritzbaren Dispersion, dadurch gekennzeichnet, dass man wenigstens eine im Handel erhältliche wässrige Dispersion, welche keine organischen Lösungsmittel enthält, vorlegt, dann wenigstens einen Hilfsstoff, ausgewählt aus der Gruppe, bestehend aus Haftvermittlern, Tensiden, Vernetzungsmitteln, Konservierungsmitteln, Antiskin-Mitteln, Weichmachern, Thixotropiermitteln und Entschäumern, hinzugibt und danach ein Pulver, hergestellt gemäss dem Verfahren nach einem der Ansprüche 1 bis 5, zufügt und dispergiert.

7. Verfahren nach Anspruch 6, dadurch gekennzeichnet, dass der Weichmacher Bitumen ist.

8. Verwendung der gemäss dem Verfahren nach Anspruch 6 oder 7 hergestellten Dispersion zur Beschichtung von Metalloberflächen oder von Oberflächen von Legierungen.

9. Verwendung nach Anspruch 8, dadurch gekennzeichnet, dass die genannten Oberflächen katophoresiert sind.

10. Verwendung nach einem der Ansprüche 8 bis 9, dadurch gekennzeichnet, dass die Beschichtung als Unterbodenschutz und/oder Antidröhn und/oder Korrosionsschutz, vorzugsweise bei Fahrzeugen, insbesondere beim Automobilbau, dient.

11. Verfahren zur Herstellung eines gefüllten Plastisols, welches wenigstens eine der nachstehenden Eigenschaften, nämlich Spritz-, Pump-, Extrudier-, Streich-, und Spachtelbarkeit, aufweist, dadurch gekennzeichnet, dass man die folgenden Komponenten miteinander vermischt:
- wenigstens ein im Handel erhältliches Kunststoffpulver, vorzugsweise ein Polyvinylchloridpulver,
- wenigstens einen im Handel erhältlichen Weichmacher,
- wenigstens einen Hilfsstoff, ausgewählt aus der Gruppe, bestehend aus Haftvermittlern, Stabilisatoren, Pigmenten, dehydratisierenden Mitteln und Thixotropiermitteln,
- ein Pulver, hergestellt gemäss dem Verfahren nach einem der Ansprüche 1 bis 5.

12. Verwendung des gemäss dem Verfahren nach Anspruch 11 hergestellten Plastisols zur Beschichtung von Metalloberflächen oder von Oberflächen von Legierungen.

13. Verwendung nach Anspruch 12, dadurch gekennzeichnet, dass die genannten Oberflächen katophoresiert sind.

14. Verwendung nach einem der Ansprüche 12 bis 13, dadurch gekennzeichnet, dass die Beschichtung als Unterbodenschutz und/oder Antidröhn und/oder Korrosionsschutz, und/oder Nahtabdichtung, und/oder Metallkleber, vorzugsweise bei Fahrzeugen, insbesondere beim Automobilbau, dient.